# EUROPÄISCHE PATENTSCHRIFT

(11) **EP 0 303 950 B1**
(45) Veröffentlichungstag und Bekanntmachung des Hinweises auf die Patenterteilung: **20.01.1993**
(21) Anmeldenummer: 88112964.7
(22) Anmeldetag: 10.08.1988
(51) Int. Cl.: C08K 5/54, C08G 77/04, C09K 17/00, E21D 11/38

(54) **Verfahren zur Verfestigung von geologischen Formationen**
Process for the solidification of geologic formations
Procédé pour la solidification de formations géologiques

(30) Priorität: 21.08.1987 DE 3727880
(43) Veröffentlichungstag der Anmeldung: 22.02.1989
(73) Patentinhaber: BAYER AG, 51368 Leverkusen (DE); BERGWERKSVERBAND GMBH, D-45307 Essen (DE)
(72) Erfinder: Müller, Hanns Peter, Dr., D-5060 Bergisch-Gladbach 2 (DE); Kapps, Manfred, Dr., D-5060 Bergisch-Gladbach 2 (DE); Vehlewald, Peter, Dr., D-5653 Leichlingen 1 (DE); Meyer, Frank, Dr., D-4300 Essen 15 (DE); Cornely, Wolfgang, Dr., D-4390 Gladbeck (DE); Mehesch, Hans Ernst, Dr., D-4300 Essen 1 (DE)
(74) Vertreter: Müller, Gerhard, Dr.

(56) Entgegenhaltungen:
- WO-A-87/01757
- US-A- 4 114 382

## Beschreibung

Die vorliegende Erfindung betrifft ein neues Verfahren zur Verfestigung von geologischen Formationen im Untertagebau oder im Tiefbau, insbesondere im Steinkohlenbergbau mit zu Polyurethankunststoffen ausreagierenden Reaktionsgemischen auf Basis von organischen Polyisocyanaten und Polyhydroxyverbindungen, wobei spezielle cyclische Polysiloxane als den Schaumvorgang regulierende Verbindungen eingesetzt werden.

Die Verfestigung geologischer Formation unter Tage, insbesondere im Steinkohlenbergbau, mit Hilfe von der in der Formation aushärtenden, schäumenden Polyurethanen ist bekannt (vgl. z.B. Zeitschrift Glückauf (1968), Seite 666 bis 670; Zeitschrift Glückauf (1977), Seiten 707 bis 711; Zeitschrift Bergbau (1977), Seiten 124 bis 129; DE-PS 1 129 894; DE-PS 1 758 185; DE-PS 1 784 458; DE-PS 2 436 029; DE-PS 2 623 646 oder DE-PS 3 139 395). Daneben werden derartige zu Polyurethanen reagierende Mischungen auch zum Abdichten gegen Wasser und/oder Gase benutzt.

Nach diesem als Stand der Technik zu betrachtenden Verfahren geht man in der Regel wie folgt vor:
Die beiden Komponenten der Reaktion Polyisocyanat und Polyalkohol (Polyhydroxyl-Komponente) werden separat bis vor ein Bohrloch gefördert, dort kontinuierlich in einem statischen Mischer vereinigt und über das Bohrloch in die Gebirgsformation verpreßt, wo sie unter Aufschäumen aushärten.

Die nach diesem Prinzip zu verfestigenden geologischen Formationen, insbesondere die Gesteinsschichten unter Tage weisen einen stark unterschiedlichen Wassergehalt auf. Bei Verwendung von Reaktionsgemischen, die im wesentlichen aus Polyisocyanaten und den aus der Polyurethanchemie bekannten Polyetherpolyolen bestehen, hat dies zur Folge, daß die Polyisocyanatkomponente mit dem in der Formation vorliegenden Wasser unkontrolliert reagiert, so daß insbesondere bei Gesteinsschichten mit hohem Wassergehalt zwischen dem Polyisocyanat und dem Wasser eine zu Polyharnstoff-Leichtschaumstoffen führende Reaktion abläuft, die eine ausreichende Verfestigung der Gesteinsformation nicht gewährleistet. Eine homogene und ausreichende Verfestigung der Gesteinsformation hat vielmehr zur Voraussetzung, daß, weitgehend unabhängig vom Wassergehalt der Formation, eine kontrollierte und homogene Schaumbildung stattfindet, wobei die Eigenschaften der sich bildenden Schaumstoffe, unabhängig vom Wassergehalt der Formation, durch geeignete Wahl der Zusammensetzung des Reaktionsgemisches vorherbestimmbar sein sollte. Wie sich in der Vergangenheit zeigte, gestattet die Mitverwendung von Rizinusöl neben den üblichen Polyetherpolyolen in der Polyolkomponente einen ersten Schritt in diese Richtung. Die Mitverwendung von Rizinusöl, welches im allgemeinen in Mengen von 5 bis 20 Gew.-%, bezogen auf die Polyolkomponente, eingesetzt wird, reduziert die Tendenz zu unerwünschten Polyisocyanat-Wasser-Nebenreaktionen, wodurch ein zu hohes Aufschäumen der Polyurethanharze, insbesondere in Kontakt mit dem in der Formation vorliegenden Wasser und damit eine Schwächung der mechanischen Eigenschaften unterdrückt wird.

Der Nachteil der Mitverwendung von Rizinusöl ist jedoch in dem Umstand zu sehen, daß es sich um ein Naturprodukt handelt, welches starken Schwankungen hinsichtlich seiner Eigenschaften unterworfen ist. Da Rizinusöl außerdem in den genannten hohen Mengen mitverwendet werden muß, stellt es einen erheblichen Kostenfaktor dar, da die Preise für dieses Naturprodukt ebenfalls starken Schwankungen unterworfen sind und im Mittel erheblich über den Preisen der üblichen Polyetherpolyole liegen.

Es war daher die der Erfindung zugrunde liegende Aufgabe, ein neues Verfahren zur Verfestigung von geologischen Formationen zur Verfügung zu stellen, welches auf die Mitverwendung von Rizinusöl nicht angewiesen ist, und welches dennoch die mit der Verwendung von Rizinusöl verbundenen Vorteile gewährleistet.

Diese Aufgabe konnte mit dem nachstehend näher beschriebenen erfindungsgemäßen Verfahren, bei welchem bestimmte cyclische Polydimethylsiloxane mitverwendet werden, gelöst werden. Überraschenderweise wurde gefunden, daß durch die Mitverwendung dieser Hilfsmittel nicht nur die genannte vorteilhafte Eigenschaft von Rizinusöl übertroffen werden kann, sondern daß auch die mechanischen Eigenschaften der Polyurethankunststoffe wesentlich verbessert werden. Bei der Mitverwendung der cyclischen Polydimethylsiloxane wird vor allem die Bildung von Leichtschaumstoffen, selbst in Gesteinsschichten mit hohem Wassergehalt, verhindert, so daß mit dem erfindungsgemäßen Verfahren gleichmäßig expandierte Polyurethankunststoffe mit ausgezeichneten mechanischen Eigenschaften gebildet werden.

Die Tatsache, daß cyclische Polydimethylsiloxane die Bildung von Leichtschaumstoffen verhindern, ist überraschend, da aus der Polyurethanchemie an sich bekannt ist, daß (lineare) Polydimethylsiloxane bzw. Polyetherpolysiloxane Schaumstabilisatoren darstellen und somit genau das Gegenteil bewirken.

Gegenstand der Erfindung ist ein Verfahren zur Verfestigung von geologischen Formationen im Untertagebergbau oder Tiefbau durch Einbringen von zu Polyurethankunststoffen ausreagierenden Reaktionsgemischen in die zu verfestigenden Formationen, wobei die Reaktionsgemische aus
a) einer Polyisocyanatkomponente,
b) einer Polyolkomponente und
c) mindestens einem Hilfs- bzw. Zusatzmittel
bestehen, dadurch gekennzeichnet, daß man als Komponente c), gegebenenfalls neben weiteren Hilfs- und Zusatzmitteln, c1) cyclische Polydimethylsiloxane des Molekulargewichtsbereichs 222 bis 740 in einer Menge von 0,01 bis 5,0 Gew.-%, bezogen auf das Gesamtgewicht der Komponenten a) und b), verwendet.

Bei der beim erfindungsgemäßen Verfahren einzusetzenden Polyisocyanatkomponente a) handelt es sich vorzugsweise um Polyphenylenpolymethylen-polyisocyanate, wie sie durch Anilin/Formaldehyd-Kondensation und anschließende Phosgenierung hergestellt werden ("polymeres MDI") oder um Carbodiimid-, Biuret-, Urethan- und/oder Allophanatgruppen aufweisende, bei Raumtemperatur flüssige Derivate dieser Polyisocyanate. Die bei Raumtemperatur flüssigen, durch Phosgenierung von Anilin/Formaldehyd-Kondensation erhaltenen Polyisocyanatgemische ("polymeres MDI"), sowie deren flüssige, NCO-Gruppen aufweisende Umsetzungsprodukte mit unterschüssigen Mengen (NCO/OH-Molverhältnis = 1:0,005 bis 1:0,3) mehrwertiger Alkohole des Molekulargewichtsbereichs 62 bis 3000, insbesondere Ethergruppen aufweisender Polyole des Molekulargewichtsbereichs 106 bis 3000 sind bevorzugt. Bei Raumtemperatur flüssige Gemische aus 2,4'- und 4,4'-Diisocyanatdiphenylmethan sind ebenfalls als Polyisocyanatkomponente a) geeignet. Grundsätzlich kommen erfindungsgemäß aber auch andere organische Polyisocyanate, wie sie z.B. aus der DE-OS 2 832 253, Seiten 10 und 11, bekannt sind, in Frage. Ganz besonders bevorzugt werden Polyisocyanatgemische der Diphenylmethan-Reihe einer Viskosität bei 25° C von 50 bis 500 mPas mit einem NCO-Gehalt von ca. 30 bis 33 Gew.-% eingesetzt.

Bei der Polyolkomponente b) handelt es sich um organische Polyhydroxylverbindungen bzw. um Gemische organischer Polyhydroxylverbindungen einer (mittleren) OH-Zahl von 100 bis 800, vorzugsweise 250 bis 400.

Im allgemeienen handelt es sich bei der Polyolkomponente b) um die aus der Polyurethanchemie an sich bekannten Polyetherpolyole bzw. um Gemische verschiedener derartiger Polyetherpolyole. Im Falle der Verwendung von Gemischen verschiedener Polyhydroxylverbindungen beziehen sich die gemachten Angaben bezüglich der Hydroxylzahl auf diese Gemische. Dies bedeutet, daß einzelne Komponenten der Gemische auch eine außerhalb der genannten Bereiche liegende Hydroxylzahl aufweisen können. Gut brauchbare Polyetherpolyole sind Propoxylierungsprodukte und/oder Ethoxylierungsprodukte von zwei- bis achtwertigen Startermolekülen wie beispielsweise Wasser, 1,2-Dihydroxypropan, Trimethylolpropan, Pentaerythrit, Glycerin, Sorbit, Ethylendiamin und gegebenfalls Rohrzucker. Im allgemeinen weist die Komponente b) eine mittlere Hydroxylfunktionalität von 2,0 bis 5,0, vorzugsweise 2,0 bis 3 auf. Geeignete derartige Gemische können beispielsweise dadurch erhalten werden, daß man entsprechende Gemische von Startermolekülen der beispielhaft genannten Art einer Alkoxylierungsreaktion unterzieht. Es ist jedoch auch möglich, separat hergestellte Polyhydroxypolyether nach ihrer Herstellung miteinander zu erfindungsgemäß einzusetzenden Komponente b) abzumischen.

Erfindungswesentlich ist nun die Mitverwendung von Polydimethylsiloxanen c1), gegebenenfalls neben weiteren Hilfs- und Zusatzmitteln c).

Bei der Komponente c1) handelt es sich um beliebige cyclische Polydimethylsiloxane oder deren Gemische, wie sie technisch durch gezielte Hydrolyse von Dimethyl-dichlorsilan gewonnen werden.

Beispielhaft seien folgende Verbindungen dieses Typs des Molekulargewichtsbereichs 222 bis 740 genannt. 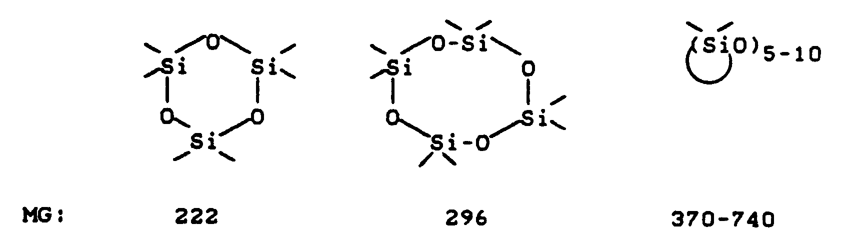
Besonders bevorzugt ist technisches Oktamethylcyclotetrasiloxan.

Die cyclischen Polydimethylsiloxane werden in einer Menge von 0,01 bis 5,0, vorzugsweise 0,05 bis 2,5 Gew.-%, bezogen auf das Gesamtgewicht der Komponente a) und b), verwendet. Sie können sowohl der Polyisocyanatkomponente a) als auch der Polyolkomponente b) vor der Herstellung des Reaktionsgemischs einverleibt werden.

Bei den gegebenenfalls außerdem mitzuverwendenden Hilfs- und Zusatzmitteln c) handelt es sich beispielsweise um
c2) Wasser, welches in einer Menge von bis zu 5, vorzugsweise bis zu 4 Gew.-%, bezogen auf das Gewicht der Komponente b), mitverwendet werden kann, oder um
c3) Katalysatoren für die Isocyanat-Additionsreaktion wie insbesondere zinnorganische Verbindungen wie Zinn(II)octoat oder Dibutylzinndilaurat oder tert. Amine wie N,N-Dimethylbenzylamin oder Triethylendiamin. Diese Katalysatoren können in einer Menge von bis zu 2 Gew.-%, vorzugsweise in einer Menge von 0,3 bis 1 Gew.-%, bezogen auf das Gesamtgemisch, mitverwendet werden.

Weitere gegebenenfalls mitzuverwendenden Hilfs- und Zusatzmittel sind beispielsweise
c4) Flammschutzmittel (z.B. Phosphorsäure-Derivate),
c5) niedermolekulare Alkanpolyole einer über 800 liegenden Hydroxylzahl wie z.B. Ethylenglykol, Propylenglykol und/oder Trimethylolpropan,
c6) Ricinusöl oder
c7) organische bzw. anorganische Füllstoffe (z.B. Harnstoff, Calciumcarbonat, Glimmer oder Talk).

Während die erfindungswesentlichen Hilfsmittel c1) sowohl der Polyol- als auch der Polyisocyanatkomponente einverleibt werden können, werden die übrigen, gegebenenfalls mitzuverwendenden Hilfs- und Zusatzmittel, im allgemeinen vor der Durchführung des erfindungsgemäßen Verfahrens mit der Polyolkomponente vereinigt.

Die Ausgangskomponenten werden zu Durchführung des erfindungsgemäßen Verfahrens in solchen Mengen miteinander vermischt, die einer Isocyanat-Kennzahl von 90 bis 150, vorzugsweise von 120 bis 140, entsprechen. Unter "Isocyanat-Kennzahl" ist hierbei der Quotient aus der Anzahl der im Reaktionsgemisch vorliegenden Isocyanatgruppen, geteilt durch die Anzahl der im Reaktionsgemisch vorliegenden, gegenüber Isocyanatgruppen reaktionsfähigen Gruppen, multipliziert mit 100, zu verstehen, wobei Wasser als difunktionelle Verbindung in die Berechnung eingeht.

Zur Durchführung des erfindungsgemäßen Verfahrens werden die erfindungswesentlichen Hilfsmittel c1), wie ausgeführt, entweder der Polyisocyanatkomponente a) oder der Polyolkomponente b) und die gegebenenfalls außerdem mitzuverwendenden Hilfs- und Zusatzmittel c) der Polyolkomponente b) einverleibt, worauf sich eine intensive Durchmischung der Komponenten a) und b) anschließt. Hierzu können die an sich bekannten Mischaggregate des Standes der Technik verwendet werden.

Die Durchführung des erfindungsgemäßen Verfahrens erfolgt im übrigen nach den bekannten Methoden des Standes der Technik, indem man in die zu verfestigenden Formationen eine Vielzahl von Löchern einer Tiefe von ca. 2 bis 6 m und eines Durchmessers von ca. 20 bis 80 mm bohrt und in diese die erfindungsgemäßen Gemische einbringt. In der Regel verschließt man die Bohrlöcher mittels eines Bohrlochverschlusses mit einer Durchführung, durch die über ein Rohr die Reaktionsmischung injiziert werden kann, wobei ein in der Durchführung enthaltenes Rückschlagventil das Bohrloch nach Abschluß der Injektion gegen Wiederausfließen der Reaktionsmischung sichert. Das Injizieren kann mit Drücken bis über 100 bar erfolgen, zu hohe Drücke können indessen zum Ausbrechen von Kohle oder Gestein führen.

Prinzipiell ist es auch möglich, bei der Durchführung des erfindungsgemäßen Verfahrens nach dem Prinzip der US-PS 3 698 196 zu verfahren, wobei die Polyisocyanatkomponente a) einerseits und die Polyolkomponente b) andererseits unter Beachtung der obengenannten Isocyanat-Kennzahl in die Patronen einer Zweikammer-Patrone gefüllt werden, die dann in das vorgefertigte Bohrloch eingebracht und dort zur Vermischung der beiden Komponenten mechanisch zertrümmert wird. Nach der Zertrümmerung der Patrone wird das Bohrloch verschlossen. Auch bei dieser Variante werden selbstverständlich die erfindungswesentlichen Hilfsmittel c1) entweder der Polyisocyanatkomponente oder der Polyolkomponente und die übrigen, gegebenenfalls mitzuverwendenden Hilfs- und Zusatzmittel der Polyolkomponente zugegeben. Das Zweikammer-Patronen-Verfahren ist jedoch gegenüber der erstgenannten Verfahrensweise weniger bevorzugt.

Nach dem Einbringen des flüssigen Reaktionsgemischs in die geologische Formation und nach dem Verschließen der Bohrlöcher dringt das vorzugsweise aufschäumend erhärtende Gemisch unter dem eigenen Schäumdruck in die zu verfestigenden Formationen ein und füllt gleichzeitig auch das Bohrloch vollständig aus. Die resultierenden Polyurethankunststoffe, insbesondere -schaumstoffe, bewirken aufgrund ihrer ausgezeichneten Haftung an der Kohle bzw. dem Nebengestein und aufgrund ihrer ausgezeichneten mechanischen Eigenschaften eine nachhaltige Verfestigung der zu verfestigenden geologischen Formation.

Durch die erfindungswesentliche Maßnahme der Mitverwendung der cyclischen Dimethylsiloxane c1) wird erreicht, daß das durch Wasserreaktion entstehende Kohlendioxid anfangs entweicht und somit es erst in der Endphase der Reaktion zu dem gewünschten Aufschäumen und zur Ausbildung der endgültigen, gleichmäßigen, vorzugsweise groben Schaumstruktur kommt.

Ein Arbeiten ohne die erfindungswesentlichen Zusätze würde bewirken, daß bereits in der Anfangsphase der Reaktion ein Aufschäumen stattfindet, welches zu Schaumstrukturen mit einer inhomogenen Dichteverteilung führt, welche in weiten Bereichen eine zu geringe Dichte und damit zu schlechte mechanische Eigenschaften aufweisen. Bei dem genannten Aufschäumen in der späteren Reaktionsphase tritt eine derartige, unerwünschte unterschiedliche Dichte der Schaumstoffe nicht mehr auf, so daß stets Schaumstoffe einer homogenen Dichte und damit mit homogenen mechanischen Eigenschaften resultieren. Die erfindungswesentlichen cyclischen Polydimethylsiloxane erweisen sich diesbezüglich als wesentlich effektiver als das für den gleichen Zweck bislang eingesetzte Rizinusöl. Im übrigen ist die erfindungsgemäße Verwendung von cyclischen Polydimethylsiloxanen mit dem Vorteil verbunden, daß die Viskosität der zum Einsatz gelangenden Polyolkomponente b) niedriger liegt als eine entsprechende, keine cyclische Polydimethylsiloxane aufweisende Polyolkomponente. Hierdurch wird die Fähigkeit des Reaktionsgemischs, auch in kleine Risse der zu verfestigenden Formation einzudringen, verbessert.

Die nachfolgenden Beispiele dienen der weiteren Erläuterung des erfindungsgemäßen Verfahrens. Alle Prozentangaben beziehen sich auf Gewichtsprozente.

In den nachstehenden Beispielen werden folgende Ausgangskomponenten eingesetzt:
Polyetherpolyol I, hergestellt aus einem Gemisch aus Saccharose und 1,2-Propandiol im Molverhältnis 1:5 und Propylenoxid mit einer OH-Zahl von 380 und einer Viskosität von 580 mPas bei 25°C.
Polyetherpolyol II, hergestellt aus Glycerin und Propylenoxid mit einer OH-Zahl von 380 einer Viskosität von 450 mPas bei 25°C.
Polyetherpolyol III, hergestellt aus 1,2-Propandiol und Propylenoxid mit einer OH-Zahl von 110 und einer Viskosität von 105 mPas bei 25°C.
Polyetherpolyol IV, hergestellt aus 1,2-Propandiol und Propylenoxid mit einer OH-Zahl von 284 und einer Viskosität von 75 mPas bei 25°C.
Polyetherpolyol V, hergestellt aus Trimethylolpropan und Ethylenoxid mit einer OH-Zahl von 550 und einer Viskosität von 660 mPas bei 25°C.
Polyetherpolyol VI, hergestellt aus Trimethylolpropan und Propylenoxid sowie Ethylenoxid im Mischungsverhältnis 3:97, mit einer OH-Zahl von 250 und einer Viskosität von 280 mPas bei 25°C.
Rizinusöl I, 1. Pressung, mit einer Jodzahl von 87,2, einer OH-Zahl von 158, einem Wassergehalt von 0,14 % und einer Viskosität von 678 mPas bei 25°C.
Cyclosiloxan, technisches Produkt, bestehend aus ca. 90 % Octamethyl-cyclotetrasiloxan, ca. 3 % Hexamethylcyclo-trisiloxan, ca. 7 % höhermolekulare Cyclodimethylsiloxane.
Polymeres MDI, ein durch Phosgenierung eines Formaldehyd-Anilin-Kondensats erhaltenes Isocyanat, das zu 50 % aus Diisocyanatophenylmethan besteht, mit einem NCO-Gehalt von 33 Gew.-% und einer Viskosität von 140 mPas bei 25°C.

In den nachfolgenden Beispielen 1 bis 4 werden jeweils drei Parallelversuche durchgeführt, die sich durch die jeweils eingegebene Wassermenge voneinander unterscheiden. Aus den erfindungsgemäßen Beispielen 3 und 4 ist klar ersichtlich, daß eine Erhöhung der Wassermenge von 3,0 auf 5,0 g im Unterschied zu den Vergleichsbeispielen, insbesondere zu Beispiel 1 (Vergleichsbeispiel A), kaum noch zu einer erhöhten Expansion führt. Die Systeme gemäß dem erfindungsgemäßen Beispiel 3 sind daher bezüglich ihres Schäumverhaltens gegenüber einem Wasserüberschuß weitgehend inert.

### Beispiel 1 (Vergleichsbeispiel A)

In einem nicht gewachsten Papp-Becher wurden jeweils 99 g Polyolmischung mit der eingegebenen Wassermenge vermischt und anschließend mit 120 g polymerem MDI mit einem flachen Holzstab 60 Sekunden von Hand innig verrührt. Danach wurde das Gemisch in eine vertikal hängende, unten geschlossene Polyamid-Schlauchfolie (Umfang 134 mm) gegossen. Die Füllhöhe des nicht Gas-entwickelnden flüssigen Reaktionsgemischs wird gleich 1 gesetzt und dient als Bezugsmaß für die zu beobachtende Expansion. Die Expansion wird als Vielfaches der Füllhöhe angegeben und als "Schäumfaktor" bezeichnet. Eine Volumenzunahme um 100 % wird demnach mit Schäumfaktor 2,0 charakterisiert.

| | | |
|---|---|---|
| Polyolmischung: | Polyetherpolyol I | 70,7 g |
| | Polyetherpolyol IV | 28,3 g |
| Wasser: | | 1,0 g/3,0 g/5,0 g |
| Schäumfaktoren: | | 4,5/7,5/10,8 |

Der Schaum ist jeweils aufgeschwommen und hat sich deutlich von einer darunterliegenden, weniger stark geschäumten Phase separiert (Rohdichte-Sprung). Die Erfahrung hat gezeigt, daß solche Effekte auf ungenügende Festigkeit - mangels Masse im oberen Bereich - hindeuten. Solche Formulierungen versagen beim Einsatz unter Tage.

### Beispiel 2 (Vergleichsbeispiel B)

Verfahren wie in Beispiel 1 beschrieben.

| | | |
|---|---|---|
| Polyolmischung: | Polyetherpolyol I | 63,9 g |
| | Polyetherpolyol IV | 25,5 g |
| | Rizinusöl I | 9,6 g |
| Wasser: | | 1,0 g/3,0 g/5,0 g |
| Schäumfaktoren: | | 2,5/3,5/8,8. |

### Beispiel 3 (erfindungsgemäß)

Verfahren wie in Beispiel 1 beschrieben.

| | | |
|---|---|---|
| Polyolmischung: | Polyetherpolyol I | 69,5 g |
| | Polyetherpolyol IV | 28,5 g |
| | Cyclosiloxan | 1,0 g |
| Wasser: | | 1,0 g/3,0 g/5,0 g |
| Schäumfaktoren: | | 1,7/4,0/4,0. |

Das Reaktionsprodukt ist gleichmäßig durch Blasen aufgetrieben. Ein Rohdichte-Sprung ist nicht erkennbar.

### Beispiel 4

980 g Polyetherpolyolgemisch gemäß Beispiel 3 werden mit 10 g Wasser sowie mit 10 g Cyclosiloxan versetzt und unter Rühren 30 Min. lang gemischt. Es entsteht eine homogene, klare Lösung, die zum Einsatz für die Verfestigung von geologischen Formationen als Polyetherformulierung geeignet ist.

Anstelle des Polyetherpolyolgemisches gemäß Beispiel 3 können auch die Polyetherpolyole I bis VI oder deren Gemische eingesetzt werden.

### Beispiel 5

990 g polymeres MDI werden mit 10 g Cyclosiloxan versetzt und unter Rühren 30 Min. lang gemischt. Nach anfänglicher Unverträglichkeit entsteht eine homogene, klare Lösung, die ebenfalls zum Einsatz für die Verfestigung von geologischen Formationen als MDI-Formulierung geeignet ist.

## Patentansprüche

1. Verfahren zur Verfestigung von geologischen Formationen im Untertagebergbau oder Tiefbau durch Einbringen von zu Polyurethankunststoffen ausreagierenden Reaktionsgemischen in die zu verfestigenden Formationen, wobei die Reaktionsgemische aus
a) einer Polyisocyanatkomponente,
b) einer Polyolkomponente und
c) mindestens einem Hilfs- bzw. Zusatzmittel
bestehen, dadurch gekennzeichnet, daß man als Komponente c), gegebenenfalls neben weiteren Hilfs-und Zusatzmitteln, c1) cyclische Polydimethylsiloxane des Molekulargewichtsbereichs 222 bis 740 in einer Menge von 0,01 bis 5,0 Gew.-%, bezogen auf das Gesamtgewicht der Komponenten a) und b), verwendet.

2. Verfahren gemäß Anspruch 1, dadurch gekennzeichnet, daß man die Komponente c1) der Polyisocyanatkomponente a) vor der Herstellung des Reaktionsgemisches einverleibt.

3. Verfahren gemäß Anspruch 1, dadurch gekennzeichnet, daß man die Komponente c1) der Komponente b) vor der Herstellung des Reaktionsgemisches einverleibt.

## Claims

1. A method of stabilising geological formations in underground or deep working by introducing reactive mixtures into the formations to be stabilised, the mixtures reacting to form polyurethane plastics and consisting of:
a) a polyisocyanate component
b) a polyol component and
c) at least one additive or adjuvant,
characterised in that the component c), optionally together with other additives and adjuvants, consists of c1), i.e. cyclic polydimethyl siloxane in the molecular weight range of 222 to 740 and in a proportion of 0.01 - 5.0 wt.% relative to the total weight of the components a) and b).

2. A method according to claim 1, characterised in that the component c1) is incorporated in the polyisocyanate component a) before the reaction mixture is manufactured.

3. A method according to claim 1, characterised in that the component c1) is incorporated in component b) before the reactive mixture is manufactured.

## Revendications

1. Procédé pour consolider des formations géologiques dans les exploitations souterraines ou les mines, en introduisant dans les formations à consolider des mélanges réactionnels réagissant en formant des matières plastiques polyuréthanniques, les mélanges réactionnels étant composés de
a) un composant polyisocyanate,
b) un composant polyol, et
c) au moins un adjuvant ou additif,
caractérisé en ce que l'on emploie comme composant c), éventuellement en plus d'autres adjuvants et additifs, c1) des polydiméthylsiloxanes cycliques de poids moléculaires de 222 à 740, en quantités de 0,01 à 5,0% en poids par rapport au poids total des composants a), b).

2. Procédé selon la revendication 1, caractérisé en ce que l'on incorpore le composant c1) au composant polyisocyanate a) avant la fabrication du mélange réactionnel.

3. Procédé selon la revendication 1, caractérisé en ce que l'on incorpore le composant c1) au composant b) avant la fabrication du mélange réactionnel.
